# EUROPÄISCHE PATENTSCHRIFT

(11) **EP 1 307 707 B1**
(45) Veröffentlichungstag und Bekanntmachung des Hinweises auf die Patenterteilung: **30.07.2008**
(21) Anmeldenummer: 01956372.5
(22) Anmeldetag: 24.07.2001
(51) Int. Cl.: G01C 21/34

(54) **VERFAHREN ZUR ROUTENBERECHNUNG**
ROUTE CALCULATION METHOD
PROCEDE POUR CALCULER UN ITINERAIRE

(30) Priorität: 28.07.2000 DE 10036817
(43) Veröffentlichungstag der Anmeldung: 07.05.2003
(73) Patentinhaber: ROBERT BOSCH GMBH, 70442 Stuttgart (DE)
(72) Erfinder: SCHMIDT, Heinrich, 31199 Diekholzen (DE); HOEVELING, Joerg, 31180 Giesen (DE); HOFFMANN, Ralf, 31137 Hildesheim (DE)
(86) Internationale Anmeldenummer: PCT/DE2001/002794
(87) Internationale Veröffentlichungsnummer: WO 2002/010687

(56) Entgegenhaltungen:
- EP-A- 0 827 126
- PATENT ABSTRACTS OF JAPAN vol. 1998, no. 04, 31. März 1998 (1998-03-31) -& JP 09 325041 A (MATSUSHITA ELECTRIC IND CO LTD), 16. Dezember 1997 (1997-12-16)
- PATENT ABSTRACTS OF JAPAN vol. 2000, no. 06, 22. September 2000 (2000-09-22) -& JP 2000 088594 A (DENSO CORP;TOYOTA MOTOR CORP; AISIN AW CO LTD; FUJITSU TEN LTD; MATSUS), 31. März 2000 (2000-03-31)

## Beschreibung

### Stand der Technik

Die Erfindung geht von einem Verfahren zur Routenberechnung von einem aktuellen Standort zu mindestens einem Zielort über mindestens einen Durchgangszielort nach der Gattung des unabhängigen Patentanspruchs aus.

Heutige, beispielsweise von Firma Blaupunkt-Werke GmbH, Hildesheim, angebotene und vertriebene Fahrzeugnavigationsgeräte ermöglichen nach Eingabe eines Zielorts durch den Benutzer eine automatische Routenberechnung vom aktuellen Fahrzeugstandort zum eingegebenen Zielort und leiten den Fahrzeugführer durch Ausgabe vorzugsweise akustischer Fahrtanweisungen vom jeweiligen momentanen Fahrzeugstandort entlang der berechneten Fahrtroute zum Zielort.

Die Routenberechnung erfolgt dabei üblicherweise unter Berücksichtigung eines vorgegebenen oder benutzerseitig vorgebbaren Optimierungskriteriums, wie schnellste oder kürzeste Route vom Stand- zum Zielort. Eine Berücksichtigung nutzerseitiger Präferenzen hinsichtlich einer bestimmten bevorzugten Fahrtstrecke oder eines bestimmten bevorzugten Streckenabschnitts ist dabei nicht vorgesehen.

Solche nutzerseitigen Präferenzen können beispielsweise darin begründet sein, dass dem Nutzer detaillierte Kenntnisse über Verkehrsbehinderungen auf bestimmten Strecken oder Streckenabschnitten vorliegen, die es zu umgehen gilt, oder er ihm bekannte Streckenabschnitte auf Kosten kleinerer Umwege gegenüber ihm unbekannten Streckenabschnitten vorzieht. Weiter können die Nutzerpräferenzen auch beispielsweise in einer durch Bevorzugung gut ausgebauter Bundes- oder Landstraßen vor Autobahnen erzielbaren zeitlichen und/oder entfernungsmäßigen Abkürzungen begründet sein.

Möchte ein Fahrzeugführer von einem aktuellen Standort zu einem Zielort über eine bestimmte Strecke geleitet werden, so bietet sich bei Navigationsgeräten nach dem Stand der Technik (Siehe z.B. EP 0 827 126) derzeit die Eingabe sogenannter Zwischenziele an, die das Navigationsgerät veranlassen, eine Route vom aktuellen Stand- zum Zwischenzielort und von dort zum eigentlichen Zielort zu berechnen und damit bestimmte bevorzugte Streckenabschnitte in die Routenberechnung einzubeziehen.

Dieses Verfahren hat den Nachteil, dass nach der Routenberechnung eine Zielführung vom Stand- über die eingegebenen Zwischenziele zum Zielort derart erfolgt, dass eine Zielführung zum jeweils nächsten Zwischenziel solange erfolgt, bis dieses tatsächlich angefahren worden ist. Ein Passieren lediglich der Umgebung des Zwischenziels, wie dies eigentlich erwünscht wäre, ist damit nicht möglich.

### Vorteile der Erfindung

Das erfindungsgemäße Verfahren mit den Merkmalen des unabhängigen Patentanspruchs hat demgegenüber den Vorteil, eine Routenberechnung über benutzerdefinierte Durchgangsziele - der Begriff Durchgangsziel wird bewußt zur Unterscheidung von den vorerwähnten Zwischenzielen verwandt - derart zu ermöglichen, dass diese als Stützstellen zum Erzwingen eines Einbeziehens bestimmter bevorzugter Strecken oder Streckenabschnitte in die Routenberechnung verwendet werden, ohne daß diese bei einer anschließenden Zielführung tatsächlich angefahren werden müßten. Dies wird erfindungsgemäß dadurch erreicht, dass nach Vorgabe mindestens eines Durchgangszielorts automatisch zu jedem des mindestens einen Durchgangszielorts ein Durchgangszielpunkt bestimmt wird, der in einem durch ein vorgegebenes Kriterium bestimmten Umkreis des mindestens einen Durchgangszielorts liegt, und dass die Route über den mindestens einen Durchgangszielpunkt berechnet wird.

Das oder die Durchgangsziel(e) ist oder sind damit nicht Bestandteil der Fahrtroute, vielmehr wird oder werden das oder die Durchgangsziel(e) nur in einem durch den Umkreis definierten Mindestabstand passiert.

Vorteilhafte Weiterbildungen des erfindungsgemäßen Verfahrens sind in den abhängigen Ansprüchen angegeben.

Das erfindungsgemäße Verfahren wird vorteilhafterweise derart ausgeführt, dass
- in einem ersten Schritt der Startort als Ausgangspunkt für die Routenberechnung und ein erster des mindestens einen Durchgangszielorts als Durchgangsziel gesetzt wird,
- in einem zweiten Schritt ein Routenabschnitt vom Ausgangspunkt bis zu dem automatisch bestimmten, in einem nach dem vorgegebenen Kriterium bestimmten Fangbereich um das Durchgangsziel liegenden Durchgangszielpunkt berechnet wird,
- in einem dritten Schritt der Endpunkt (= Durchgangszielpunkt) des zuvor berechneten Routenabschnitts als Ausgangspunkt für die Berechnung eines weiteren Routenabschnitts gesetzt wird,
dass im Falle weiterer Durchgangszielorte der nächste des mindestens einen Durchgangszielorts als Durchgangsziel gesetzt und der Ablauf mit dem zweiten Schritt fortgesetzt wird,
dass im Falle keiner weiteren Durchgangszielorte
- in einem vierten Schritt der Routenabschnitt vom im dritten Schritt gesetzten Ausgangspunkt zum Zielort berechnet wird, und
dass sich die Route aus einer Hintereinanderreihung der berechneten Routenabschnitten ergibt.

Das vorgegebene Kriterium kann dabei vorteilhaft eine vorgegebene Entfernung zum Durchgangsziel in Form eines fest vorgegebenen Entfernungswerts, in Form eines aus berechneten Routeninformationen, insbesondere der berechneten Routenlänge, abgeleiteten Entfernungswerts oder eines fallabhängig fest vorgegebenen oder aus berechneten Routeninformationen abgeleiteten Entfernungswerts, je nachdem welcher Entfernungswert größer ist, sein.

Das vorgegebene Kriterium kann weiterhin vorteilhaft ein zum Erreichen des Durchgangsziels erforderlicher Straßenklassenwechsel, insbesondere ein erforderlicher Wechsel einer Straßenklasse auf eine Straße einer niedrigeren Straßenklasse, sein.

Das vorgegebene Kriterium kann weiterhin vorteilhaft fallweise eines der vorgenannten Entferungskriterien oder ein vorgenannter Straßenklassenwechsel sein, je nachdem, welches Kriterium einen weiteren Umkreis definiert.

### Zeichnungen

Ausführungsbeispiele der Erfindung sind in den Figuren dargestellt und werden nachstehende näher erläutert.

Es zeigen
Figur 1 schematisch ein Blockschaltbild des erfindungswesentlichen Teils eines Navigationsgeräts zur Durchführung des erfindungsgemäßen Verfahrens,
Figur 2 einen vereinfachten Ablaufplan des erfindungsgemäßen Verfahrens.

### Beschreibung der Ausführungsbeispiele

Die Erfindung wird nachfolgend am Beispiel eines für den Einsatz in einem Kraftfahrzeug vorgesehenen Fahrzeugnavigationsgeräts und eines Verfahrens zur Routenberechnung in einem Fahrzeugnavigationsgerät beschrieben. Dies ist jedoch nicht im Sinne einer Einschränkung zu verstehen. Vielmehr ist die Erfindung ebenso auf für anderweitigen Einsatz vorgesehene Navigationsgeräte sinngemäß anwendbar, etwa Navigationsgeräte für anderweitige Fortbewegungsmittel, oder auch als Navigationshilfe für Fußgänger im Bereich einer ihnen unbekannten Stadt. Dazu muß lediglich im wesentlichen die Datenbasis des Navigationsgeräts entsprechend angepaßt sein. Durch den Benutzer zu definierende Durchgangsziele werden im letzten Fall einer Navigationshilfe für Fußgänger dann vorzugsweise in Form von Straßenkreuzungen, markanten Bauwerken oder vergleichbaren markanten, als Stützstellen für die Routenberechnung geeigneten Punkten vorgegeben. Anderweitige Einsatzzwecke des erfindungsgemäßen Routenberechnungsverfahrens sind weiterhin vorstellbar und liegen im Bereich der Erfindung.

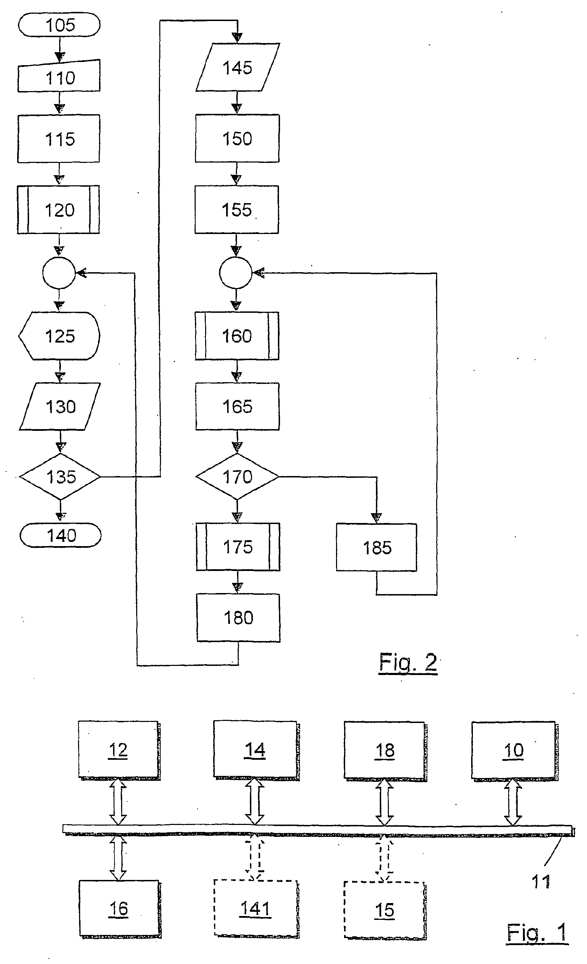

Das in Figur 1 dargestellte Navigationsgerät 1 zur Durchführung des erfindungsgemäßen Verfahrens verfügt über Positionsbestimmungsmittel 12 zur Feststellung eines aktuellen Standorts des Navigationsgeräts oder des Fahrzeugs, in dem das Navigationsgerät betrieben wird.

Die Positionsbestimmungsmittel 12 umfassen in an sich bekannter Weise Mittel zur Durchführung einer sogenannten Koppelortung, das heißt, dass aus einer zurückgelegten Wegstrecke und einer Fahrtrichtungsinformation der jeweils aktuelle Fahrzeugstandort ermittelt wird.

Zur Bestimmung der zurückgelegten Wegstrecke wird beispielsweise das Tachometersignal ausgewertet. Dieses wird wiederum in bekannter Weise aus Impulsen von Radsensoren eines ABS (= Anti-Blockier-Systems), die in Abhängigkeit der Drehung eines Fahrzeugrades eine Impulsfolge erzeugen, und einem bekannten Radumfang bestimmt. Die Richtungsinformation wird mittels eines Drehratensensors ermittelt, der Richtungsänderungen erfaßt, so dass ausgehend von einer bekannten Ausgangsfahrtrichtung aufgrund einer Drehratenänderung des Drehratensensors die jeweils aktuelle Fahrtrichtung bestimmbar ist. Aus den die Fahrtrichtung und eine zurückgelegte Wegstrecke repräsentierenden Informationen ist der jeweils aktuelle Standort des Fahrzeugs berechenbar.

Die Positionsbestimmungsmittel 12 umfassen weiterhin einen Empfänger für GPS-(= Global Positioning System-)Signale, also über Satelliten zur Positionsbestimmung ausgestrahlte Signale, aus denen ebenfalls die jeweils aktuelle Fahrzeugposition bestimmbar ist.

Die Positionsbestimmungsmittel 12 umfassen ferner eine Recheneinheit, die die Positionsinformationen des GPS-Empfängers mit denen der Koppelortung zu einer resultierenden Fahrzeugposition verknüpft. Weiter gleichen die Positionsbestimmungsmittel die so ermittelte Fahrzeugposition im Sinne einer Plausibilitätsprüfung mit in einem Massenspeicher 14 gespeicherten Verkehrswegeinformationen ab und bestimmen so einen wahrscheinlichsten aktuellen Fahrzeugstandort. Dieser letzte Schritt ist unter dem Schlagwort Map Matching bekannt.

Die von den Positionsbestimmungsmitteln 12 ermittelte Information über den aktuellen Fahrzeugstandort ist einer Steuerung 10 zugeführt, deren Funktion später näher erläutert wird.

Der Massenspeicher 14 des Navigationsgeräts 1 ist vorzugsweise in Form eines CD-ROM-Laufwerks mit eingelegter Daten-CD realisiert, anderweitige Ausführungsformen des Massenspeichers 14 sind jedoch denkbar. Im Massenspeicher 14 sind Karteninformationen, insbesondere Informationen über die Lage markanter Punkte, wie zum Beispiel von Orten und Städten zusammen mit zugehörigen, die markanten Punkte eindeutig kennzeichnenden Ortsnamen abgelegt. Weiter sind im Massenspeicher Informationen über die markanten Punkte verbindende Verkehrswege, wie insbesondere Autobahnen und Straßen niedrigerer Straßenklassen, wie Bundesstraßen, Landstraßen, Kreisstraßen, Ortsdurchgangsstraßen usw., zusammen mit jeweils einem die Straßenklasse kennzeichnenden Merkmal gespeichert.

Weiterhin umfaßt das Navigationsgerät eine Kommunikationsschnittstelle 16, die über eine Eingabevorrichtung, vorzugsweise in Form einer Tastatur, und eine, vorzugsweise optische und aktustische, Ausgabevorrichtung verfügt.

Die Eingabevorrichtung der Benutzerschnittstelle 16 dient der Eingabe eines Zielorts, zu dem eine Fahrtroute berechnet und anschließend der Fahrzeugführer geleitet werden soll. Weiter dient die Eingabevorrichtung der Eingabe eines oder mehrer Durchgangszielorte, über die die zu berechnende Route zum Zielort führen soll.

Die Ausgabevorrichtung unterstützt den Benutzer bei der Eingabe des Zielorts oder eines oder mehrerer Durchgangszielorte dergestalt, dass beispielsweise die bereits eingegebenen Buchstaben eines Ortsnamens auf der Ausgabevorrichtung optisch dargestellt werden. Weiter können aufgrund der bereits eingegebenen Buchstaben ausgewählte Vorschläge für Ortsnamen zur Auswahl durch den Benutzer angeboten werden. Die Ausgabevorrichtung dient des weiteren der vorzugsweise akustischen Ausgabe von Zielführungshinweisen zur Leitung des Fahrzeugführers entlang der berechneten Fahrtroute. Diese Zielführungshinweise enthalten vorzugsweise Hinweise zum Abbiegen von einer aktuell befahrenen auf eine andere Straße und Hinweise auf eine Entfernung bis zum Abbiegepunkt, etwa in der Art "nach 100 Metern links abbiegen" o. ä..

Weiterhin verfügt das Navigationsgerät 1 über einen Zielspeicher 18, in dem ein über die Benutzerschnittstelle 16 eingegebener Zielort ebenso, wie über die Benutzerschnittstelle 16 eingegebene Durchgangszielorte, abgelegt werden.

Die beschriebenen Komponenten, nämlich die Positionsbestimmungsmittel 12, der Massenspeicher 14, die Benutzerschnittstelle 16 und der Zielspeicher 18 greifen auf einen Datenbus 11 des Navigationsgeräts 1 zu, der an eine Steuerung 10 des Navigationsgeräts 1 angeschlossen ist und vorzugsweise von dieser gesteuert wird. Darüber hinaus können einzelne Komponenten selbsttätig mit anderen Komponenten kommunizieren, so kann beispielsweise der Rechner der Positionsbestimmungsmittel 12 selbsttätig auf den Massenspeicher 14 zugreifen, um für das Map Matching benötigte Kartendaten aus dem Massenspeicher 14 abzurufen.

Zur Vermeidung von Zugriffskonflikten bei Zugriffen auf den Datenbus 11 werden die Zugriffe nach einem geeigneten Protokoll, etwa dem an sich bekannten CSMA/CD-(= carrier sense multiple access/collision detection)-Protokoll abgewickelt.

Die Steuerung 10 dient der Steuerung der Funktionen des Navigationsgeräts 1 und ist vorzugsweise in Form eines in einem Mikroprozessor implementierten Betriebsprogramms realisiert. Im Zusammenhang mit der vorliegenden der Erfindung kommen der Steuerung 10 neben den von herkömmlichen Navigationsgeräten bekannten die Aufgaben
- Übernahme der über die Benutzerschnittstelle 16 eingegebenen Ziel- und Durchgangszielorte,
- Zuordnung von im Massenspeicher 14 zu den Ziel- und Durchgangszielorten verfügbaren Ortskoordinaten oder sonstigen die Lage der Ziel- und Durchgangszielorte kennzeichnenden Informationen zu den eingegebenen Ziel- und Durchgangszielorten,
- Ablage der Ziel- und Durchgangszielorte und der deren Lage kennzeichnenden Informationen im Zielspeicher 18,
- Sortierung der im Zielspeicher 18 abgelegten Ziel- und Durchgangszielorte nach zunehmender Entfernung zum aktuellen Fahrzeugstandort oder nach abnehmender Entfernung vom Zielort aufgrund eines Koordinatenvergleichs der Koordinaten der Durchgangszielorte mit denen des aktuellen Standorts oder des Zielorts, und
- Berechnung einer nach einem vorgegebenen Kriterium optimierten Fahrtroute vom aktuellen Fahrzeugstandort zum Zielort über die über die Benutzerschnittstelle 16 eingegebenen Durchgangszielorte,
wie später im Zusammenhang mit der Beschreibung des erfindungsgemäßen Verfahrens näher erläutert, zu.

Bei einer alternativen Ausführungsform des beschriebenen Navigationsgeräts 1 zur Durchführung des erfindungsgemäßen Verfahrens ist an den Datenbus 11 eine Luftschnittstelle 15 angeschlossen.

Die Luftschnittstelle 15 ist gemäß einer ersten Variante der alternativen Ausführungsform in Form eines Rundfunkempfängers ausgeführt, der zum Empfang und zur Dekodierung von mittels RDS (= Radio Daten System) über Rundfunk in codierter Form ausgestrahlte TMC- (= Traffic Message Channel)-Verkehrsinformationen ausgebildet ist. Zur Abspeicherung der über Rundfunk empfangenen Verkehrsinformationen ist gemäß der ersten Variante der alternativen Ausführungsform ein Verkehrsnachrichtenspeicher 141 vorgesehenen, der ebenfalls an den Bus 11 des Navigationsgeräts 1 angeschlossen ist. Die gespeicherten Verkehrsnachrichten sind als Ergänzung für die im Massenspeicher 14 abgelegten Verkehrswegeinformationen gedacht. Das Navigationsgerät verfügt damit stets über aktuelle Verkehrswegezustandsinformationen, die für eine optimierte Routenberechnung berücksichtigt werden. Diese Vorgehensweise ist an sich unter dem Schlagwort dynamisierte Zielführung bekannt und bedarf daher keiner näheren Erläuterung.

Gemäß einer zweiten Variante der alternativen Ausführungsform ist die Luftschnittstelle 15 in Form eines Mobilfunktelefons ausgebildet. Über dieses können in ähnlicher Weise, wie über Rundfunk, aktuelle Verkehrswegezustandsinformationen von einem über entsprechende Daten verfügenden Anbieter abgerufen werden. Darüber hinaus ermöglicht das Mobilfunktelefon aber auch eine teilweise oder vollständige sogenannte Offboard-Navigation. Dabei werden nach Eingabe eines Zielorts und mindestens eines Durchgangszielorts über die Benutzerschnittstelle 12 diese Daten und eine Information über den aktuellen Fahrzeugstandort an einen Anbieter gesendet. Dieser berechnet aufgrund ihm vorliegender Verkehrswegeinformationen und gegebenenfalls aktueller Verkehrswegezustandsinformationen eine Route vom aktuellen Stand- zum Ziel- über den mindestens einen Durchgangszielort. Die berechnete Route wird dann vom Anbieter ganz oder abschnittsweise auf Anfrage über das Mobilfunktelefon 15 in das Navigationsgerät übertragen, das eine Zielführung aufgrund der extern berechneten Route durchführt.

Das erfindungsgemäße Verfahren wird nachfolgend detailliert anhand des Ablaufplans gemäß Figur 2 beschrieben.

Das Verfahren beginnt mit der Inbetriebnahme des Navigationsgeräts in Schritt 105.

Darauf folgt in Schritt 110 die Eingabe eines Zielorts, zu dem ausgehend vom momentanen Fahrzeugstandort eine Fahrtroute berechnet werden soll, durch den Benutzer über die Eingabemittel der Benutzerschnittstelle 16 beispielsweise wie anhand folgenden Beispiels erläutert.

Der Fahrzeugführer möchte von seinem derzeitigen Standort, beispielsweise Stuttgart-Feuerbach, nach beispielsweise Saarlouis im Saarland fahren. Der Zielortname ist mithin Saarlouis. Zur Eingabe dieses Zielortnamens gibt der Benutzer den Buchstaben "S" ein. Hierauf ermittelt die Steuerung 10 im Datenbestand des Massenspeichers 14 den ersten Ortsnamen, der mit dem eingegebenen Buchstaben "S" beginnt. Dies sei beispielsweise der Ortsname "Saarbrücken". Weiterhin steuert die Steuerung 10 die Benutzerschnittstelle 16 zur Anzeige des ermittelten Ortsnamens "Saarbrücken" an, der sodann durch Betätigung einer Bestätigungstaste an der Benutzerschnittstelle 16 ausgewählt werden kann. Da im vorliegenden Fall Saarbrücken nicht der gewünschte Zielort ist, gibt der Benutzer über die Benutzerschnittstelle den zweiten Buchstaben "a" des Zielortnamens Saarlouis ein. Hierauf schlägt das Navigationsgerät den nächsten im Massenspeicher vorhandenen, mit den eingegebenen Buchstaben beginnenden Ortsnamen, hier also beispielsweise "Saarburg" vor. Das Verfahren wird solange fortgesetzt, bis das Navigationsgerät aufgrund der eingegebenen Buchstaben den gewünschten Ortsnamen vorschlägt, oder der Benutzer diesen vollständig eingegeben hat. Die Steuerung 10 liest dem eingegebenen Zielortnamen im Massenspeicher 14 zugeordnete Lageinformationen, also vorzugsweise Ortskoordinaten, aus dem Massenspeicher aus und legt diese zusammen mit dem Zielortnamen im Zielspeicher 18 ab.

Nach abgeschlossener Zielorteingabe wird von den Positionsbestimmungsmitteln 12 über den Bus 11 der aktuelle Fahrzeugstandort abgefragt (Schritt 115).

Ausgehend vom aktuellen Fahrzeugstandort bestimmt das Navigationsgerät 1, genauer die Steuerung 10, unter Rückgriff auf die im Massenspeicher 14 abgelegten Verkehrswegeinformationen, gemäß der alternativen Ausführungsform mit einem Rundfunkempfänger zum Empfang von Verkehrsinformationen unter zusätzlicher Berücksichtigung aktueller Verkehrswegezustandsinformationen, eine Route zum Zielort (Schritt 120).

Nach Fertigstellung der Route vom aktuellen Fahrzeugstandort zum eingegebenen Zielort steuert die Steuerung 10 die Benutzerschnittstelle 16 zur Darstellung der berechneten Route, vorzugsweise in Form einer Straßenkarte mit eingetragenen markanten Punkten, wie Städte-, Orts-, Stadttteil-, Ortsteil- oder Straßennamen, weiterhin mit Beschriftung der relevanten Verkehrswege und beispielsweise einer farbigen Hinterlegung der zu befahrenden Streckenabschnitte, je nach zweckmäßigem Detaillierungsgrad (Schritt 125). Weiterhin kann vorzugsweise eine Information über die Länge der berechneten Fahrtroute und eine voraussichtliche Fahrtdauer angezeigt werden.

Im Fall oben beschriebenen Beispiels einer geplanten Fahrt von Stuttgart-Feuerbach nach Saarlouis berechnet das Navigationsgerät beispielsweise eine Route wie aus nachfolgender Wegbeschreibung ersichtlich.

Wegbeschreibung der Fahrtroute ohne Benutzervorgaben von Durchgangszielen:

| Zeit | km ges. | km Δ | Beschreibung | abbiegen | Strecke | Richtung | |
|---|---|---|---|---|---|---|---|
| 00:00 | 0 | 0,1 | Start | auf | Bregenzer Strasse | NW | A81 |
| 00:00 | 0,1 | 0 | - | auf | - | SW | A81 |
| 00:00 | 0,1 | 0 | - | links einord nen auf | - | SW | A81 |
| 00:00 | 0,1 | 0,3 | - | links einord nen auf | B295/Steiermärker Strasse | O | A81 |
| 00:01 | 0,4 | 0 | - | halb links auf | B295/Wiener Platz | O | A81 |
| 00:01 | 0,4 | 0,8 | - | auf | B295/Borsigs trasse | NO | A81 |
| 00:03 | 1,2 | 0 | - | weiter auf | Heilbronner Strasse | O | A81 |
| 00:03 | 1,2 | 0,3 | - | links einord nen auf | B10/B27/Heil bronner Strasse | NW | A81 |
| 00:04 | 1,5 | 6,6 | - | rechts einordnen auf | B10/B27 | NO | A81 |
| 00:08 | 8,1 | 37, 7 | AK Stuttgart- Zuffenhausen (17) | rechts halten auf | A81/E41 | N | A81 |
| 00:27 | 45,8 | 5,9 | - | weiter auf | A6/E50 | NW | AK Heilb ronn/ Necka rsulm |
| 00:30 | 51,7 | 47, 2 | AK Heilbronn/Ne ckarsulm (37) | weiter auf | A6/E50 | NW | A6 |
| 00:54 | 98,9 | 7,1 | AK Walldorf (40) (31) | weiter auf | A6/E50 | NW | A6 |
| 00:58 | 106 | 11, 1 | AD Hockenheim (30)(65) | rechts halten auf | A61/E31 | N | A61 |
| 01:04 | 117,1 | 14, 4 | AK Speyer (63) | weiter auf | A61/E31 | W | A61 |
| 01:12 | 131,5 | 3,4 | AK | weiter | A61/E31 | NW | A61 |
| | | | Mutterstadt (61) (7) | auf | | | |
| 01:14 | 134,9 | 8,7 | AK Ludwigshafen (60) (5) | weiter auf | A61/E31 | N | A61 |
| 01:18 | 143,6 | 0,2 | AK Frankenthal (21) (59) | rechtshalten auf | | N | A6 |
| 01:19 | 143,8 | 0,4 | - | gerade aus einord nen | AK Frankenthal | N | A6 |
| 01:19 | 144,2 | 0,5 | - | rechts halten auf | AK Frankenthal | N | A6 |
| 01:20 | 144,7 | 61,4 | - | gerade aus auf | AK Frankenthal | W | A6 |
| 01:50 | 206,1 | 23, 6 | AK Landstuhl (12)(10) | weiter auf | A6/E50 | W | A6 |
| 02:02 | 229,7 | 21, 5 | AK Neunkirchen (8) (27) | weiter auf | A6/E50 | SW | A6 |
| 02:13 | 251,2 | 28 | AD Saarbrücken (3) (22) | weiter auf | A620 | W | A620 |
| 02:27 | 279,2 | 0,2 | AS Saarlouis-Mitte (3) | rechtshalten auf | - | NW | - |
| 02:27 | 279,4 | 0,8 | AS Saarlouis-Mitte (3) | rechts einordnen auf | B405/Metzer Strasse | NO | - |
| 02:29 | 280,2 | 0,6 | - | rechts einordnen auf | B405/Ludwigs trasse | SO | - |
| 02:30 | 280,8 | 0,2 | - | links einord nen auf | Lisdorfer Strasse | N | - |
| 02:31 | 281 | 0,2 | - | auf | Französische Strasse | NW | - |
| 02:32 | 281,2 | - | Ziel | - | - | - | - |

Der bisher beschriebene Ablauf ist von derzeit verfügbaren Navigationsgeräten, beispielsweise der Firma Blaupunkt-Werke GmbH, bekannt und bedarf daher keiner näheren Erläuterung.

Nach Ausgabe der berechneten Route hat der Benutzer die Möglichkeit, die vorgeschlagene Route zu akzeptieren, oder abzulehnen, wozu eine entsprechende Eingabe über die Benutzerschnittstelle 16 durch die Steuerung 10 abgefragt wird (Schritt 130). Die Steuerung 10 prüft daraufhin (Schritt 135), ob die vorgeschlagene Fahrtroute akzeptiert, oder abgelehnt worden ist.

Ist die vorgeschlagene Route durch eine entsprechende Benutzereingabe an der Benutzerschnittstelle 16 akzeptiert worden, so endet der Ablauf (Schritt 140). Das Navigationsgerät wird dann nachfolgend den Benutzer/Fahrzeugführer in an sich bekannter Weise durch Ausgabe von Fahrtanweisungen über die Ausgabevorrichtung der Benutzerschnittstelle 16 nach Maßgabe der berechneten Fahrtroute vom jeweils aktuellen Standort zum Zielort führen. Dieser Zielführungsvorgang ist beispielsweise von derzeitigen Navigationsgeräten der Firma Blaupunkt-Werke GmbH, Hildesheim, bekannt und bedarf daher keiner näheren Erläuterung.

Im Fall oben beschriebenen Beispiels der zu einer geplanten Fahrt von Stuttgart-Feuerbach nach Saarlouis berechneten Route gemäß vorstehender Wegbeschreibung wird also der Fahrzeugführer vom aktuellen Fahrzeugstandort, Stuttgart-Feuerbach, zur nächsten Autobahn, nämlich der A81, Fahrtrichtung Heilbronn, ab dem Autobahnkreuz Heilbronn weiter über die A6 weiter Richtung Mannheim, ab dem Autobahndreieck Heidelberg über die A61, Fahrtrichtung Worms, ab dem Autobahnkreuz Frankenthal wiederum über die A6, Richtung Kaiserslautern, und schließlich ab dem Autobahndreieck Saarbrücken weiter in Richtung Saarlouis geleitet. Die Gesamtstrecke beträgt demnach 281,2km, die veranschlagte Fahrzeit 2 Stunden, 32 Minuten.

Ist hingegen die vorgeschlagene Route durch eine entsprechende Benutzereingabe über die Benutzerschnittstelle (Schritt 130) abgelehnt und dieser Umstand durch die Steuerung 10 festgestellt worden (Schritt 135), so erhält der Benutzer nachfolgend die Möglichkeit, zur Beeinflussung der Routenberechnung einen oder mehrere Durchgangszielorte anzugeben, über die die Route berechnet werden soll.

Im vorliegenden Fall ist dem Fahrzeugführer bekannt, dass eine hinsichtlich der zurückzulegenden Entfernung kürzere Fahrtstrecke über die Städte Karlsruhe, Landau und Pirmasens führt.

Die Eingabe eines oder mehrerer Durchgangsziele (Schritt 145), im vorliegenden Fall also der Städtenamen Karlsruhe, Landau und Pirmasens, erfolgt analog der beschriebenen Zielorteingabe über die Benutzerschnittstelle 16.

Abweichend von dem beschriebenen Ablauf kann es auch vorgesehen sein, daß das oder die Durchgangsziel(e) schon vor einer ersten Routenberechnung eingegeben werden können.

Nach Eingabe eines jeden Durchgangszielorts wird dieser zusammen mit den dazu im Massenspeicher 14 verfügbaren Informationen als Durchgangszielort-Datensatz im Zielspeicher abgelegt, wobei die Daten der Durchgangszielorte zur Unterscheidung von denen des Zielorts durch eine einem Durchgangszielort-Datensatz zugeordnete entsprechende Kennung kenntlich gemacht werden.

Nach Abschluß der Durchgangszielorteingabe werden die Durchgangszielorte bzw. die Durchgangszielort-Datensätze, vorzugsweise nach abnehmender Entfernung der Durchgangszielorte vom Zielort, im Zielspeicher 18 sortiert oder, gemäß einer Varianten, den Datensätzen der Durchgangszielorte eine ihre Reihenfolge im Zielspeicher 18 angebende Kennung zugeordnet.

Anschließend wird die nachfolgende Routenberechnung initialisiert. Dazu wird ein Ausgangspunkt für einen ersten Abschnitt der zu berechnenden Route dem Startort, also dem zuvor (Schritt 115) ermittelten aktuellen Standort, gleichgesetzt (Schritt 150). Im Fall des oben angegebenen Beispiels der geplanten Fahrt von Stuttgart-Feuerbach nach Saarlouis ist dies Stuttgart-Feuerbach. Weiter wird das Durchgangsziel, zu dem der erste Routenabschnitt berechnet werden soll, dem ersten im Zielspeicher 18 abgelegten Durchgangszielort gleichgesetzt (Schritt 155). Im oben angegebenen Beispiel wird das Durchgangsziel also als der Ort Karlsruhe bestimmt.

Nachfolgend erfolgt die Berechnung eines, nach der gerade zuvor durchgeführten Initialisierung des ersten, Routenabschnitts vom Ausgangspunkt, also dem Start- oder aktuellen Standort, zum Durchgangsziel (Schritt 160) wie folgt.

Die Berechnung des Routenabschnitts erfolgt in beispielsweise von vorgenannten Navigationsgeräten an sich bekannter Weise mit dem wesentlichen Unterschied, dass ein Routenabschnitt nicht zum Durchgangsziel selbst, also beispielsweise dem Stadtzentrum des vorgegebenen Durchgangszielorts, sondern bis in eine nach einem vorgegebenen Kriterium bestimmte Umgebung des Durchgangsziels berechnet wird. Die Routenberechnung des aktuellen Routenabschnitts endet also bei Erreichen der nach dem vorgegebenen Kriterium definierten Umgebung des vorgegebenen Durchgangsziels, der Endpunkt des berechneten Routenabschnitts liegt somit im Umkreis des Durchgangsziels.

Im einzelnen erfolgt die Bestimmung des Endpunktes der berechneten Routenabschnitts wie folgt.

Zunächst berechnet der Routenberechnungsalgoithmus, der üblicherweise in Form eines rückwärts iterierenden Ford-Moore-Algorithmus realisiert ist, den Routenabschnitt vom aktuellen Standort zu einem exakt definierten Punkt innerhalb des Durchgangsziels. Ist beispielsweise als Durchgangsziel der Ortsname "Karlsruhe" eingegeben worden, wird aus dem Massenspeicher ein repräsentativer Punkt des Durchgangsziels, beispielsweise das Stadtzentrum, genauer ein bestimmter Punkt im Stadtzentrum Karsruhes, als Durchgangsziel bestimmt. Darauf wird eine provisorische Teilroute vom aktuellen Standort, also beispielsweise Stuttgart-Feuerbach, zum benannten Punkt innerhalb des Durchgangsziels Karsruhe berechnet. Dazu reiht der Routensuchalgorithmus ausgehend vom benannten Durchgangsziel (Karlsruhe, Stadtmitte) fortschreitend in Richtung des Start- oder Standorts Streckenabschnitte derart hintereinander, daß die Fahrtdauer über die resultierende Teilroute minimiert wird. In einem darauffolgenden Schritt wird sodann der Schnittpunkt der berechneten provisorischen Teilroute mit dem Umkreis des Durchgangsziels (Karslruhe, Stadtmitte) ermittelt und als Durchgangszielpunkt und damit Endpunkt der ersten Teilroute bestimmt, so daß die resultierende Teilroute auf oder in dem genannten Umkreis des Durchgangsziels endet.

Anstelle der Eingabe lediglich beispielsweise des Ortsnamens eines Durchgangsziels kann es alternativ auch vorgesehen sein, daß das Durchgangsziel in der Endzielorteingabe analoger Weise, also als Eingabe eines präzisen Punkts innerhalb des Durchgangszielorts, etwa in Form sowohl des Orts-, als auch des Straßennamens, eingegeben werden muß. Dies hat gegenüber der zuvor beschriebenen Vorgehensweise den Vorteil, daß die zur Steuerung der Zieleingabe erforderliche Software nicht aufwendig angepaßt werden muß. Die Berechnung der provisorischen Teilroute erfolgt dann zu dem exakten eingegebenen Punkt des Durchgangsziels, beispielsweise zu einer bestimmten Straße innerhalb Karlsruhes, deren Namen zusätzlich zum Durchgangszielortsnamen "Karlsruhe" eingegeben wurde. Im übrigen erfolgt die Bestimmung des Durchgangszielpunkts und damit Endpunkts der Teilroute wie beschrieben. Es wird also das nachfolgend näher erläuterte Umkreiskriterium auf die provisorisch berechnete Teilroute angewandt, beispielsweise also der Schnittpunkt eines imaginären Kreises eines vorgegebenen Radius um das exakt eingegebene Durchgangsziel mit der provisorischen Teilroute bestimmt und der nach diesem Kriterium bestimmte Punkt, hier also der Schnittpunkt des Kreises mit der provisorisch bestimmten Teilroute, als Endpunkt der Teilroute bestimmt.

Das die Umgebung des Durchgangsziels, oder den Fangbereich um das Durchgangsziel definierende vorgegebene Kriterium kann eines der drei nachfolgend beschriebenen Kriterien, oder eine logische Oder-Verknüpfung mindestens zwei oder aller der drei Kriterien umfassen, so daß im Falle einer Erfüllung eines der drei Kriterien die Umgebung des Durchgangsziels durch dieses Kriterium definiert wird und ein innerhalb dieser Umgebung um das aktuelle betrachtete Durchgangsziel liegende Punkt des aktuell berechneten Routenabschnitts zum Endpunkt des Routenabschnitts wird.

Ein erstes den Umkreis des Durchgangsziels definierendes Kriterium ist ein durch einen bestimmten Entfernungswert von beispielsweise 20km fest vorgegebener Umkreis um das Zwischenziel. Nähert sich also die Routenberechnung dem Durchgangsziel bis auf den bestimmten Entfernungwert von beispielsweise 20km an, wird der erreichte Punkt als Endpunkt der Routenberechnung des aktuell berechneten Routenabschnitts betrachtet. Im Fall des oben beschriebenen Beispiels würde also die Routenberechnung bei Erreichen einer Luftlinienentfernung von 20km zum Stadtzentrum des ersten Durchgangsziels Karsruhe auf der A8 abgebrochen. Der auf der A8, 20km vom Stadtzentrum von Karlsruhe gelegene Endpunkt des zuletzt berechneten Routenabschnitts wäre der Aufsatzpunkt zur Berechnung des nächsten Routenabschnitts zum nächsten Zwischenziel, nämlich im vorliegenden Fall Landau.

Die Wegbeschreibung des bis zum nach dem Kritierum zur Bestimmung des Umkreises um das Durchgangsziel gemäß dem ersten Ausführungsbeispiel berechneten ersten Routenabschnitts sähe wie folgt aus, wobei der letzte Eintrag nicht auf Messergebnissen, sondern auf groben Schätzungen beruht.

| Zeit | km ges. | km Δ | Beschreibung | abbiegen | Strecke | Richtung | |
|---|---|---|---|---|---|---|---|
| 00:00 | 0 | 0,1 | Start | auf | Bregenzer Strasse | NW | A81 |
| 00:00 | 0,1 | 1,1 | - | auf | - | SW | A81 |
| 00:03 | 1,2 | 1,5 | - | auf | B295/Föhrich strasse | W | A81 |
| 00:06 | 2,7 | 1,5 | - | weiter auf | B295 | W | A81 |
| 00:08 | 4,2 | 3,1 | - | auf | B295/Ditzinger Strasse | W | A81 |
| 00:14 | 7,3 | 0,5 | - | weiter auf | B295/Weilimdorfer Strasse | W | A81 |
| 00:15 | 7,8 | 6,7 | AS Stuttgart- Feuerbach (18 ) | linkseinordnen auf | A81/E41 | S | AD Leonb erg |
| 00:19 | 14,5 | 52 | AD Leonberg (49)(19) | rechts halten auf | A8/E52 | SW | A8 |
| 00:40 | 60,0 | 2 | - | weiter auf | A8/E52 | NW | A8 |

Ein zweites den Umkreis des Duchgangsziels definierendes Kriterium ist ein aus der Länge des bisher berechneten Routenabschnitts oder alternativ der Summe der Längen der bisher berechneten Routenabschnitte abgeleiteter Entfernungswert von beispielswiese 5% der Gesamtlänge des oder der bisher berechneten Routenabschnitts oder Routenabschnitte. Im Fall des oben beschriebenen Beispiels einer geplanten Fahrt von Stuttgart-Feuerbach nach Saarlouis über Karlsruhe, Landau und Pirmasens würde der Umkreis um das Stadtzentrum von Karlsruhe also 5% der Entfernung vom Startpunkt, Stuttgart-Feuerbach, bis zum aktuellen Standort betragen. Der Endpunkt des aktuell berechneten Routenabschnitts läge innerhalb dieses Umkreises und würde darauf in Schritt 165 als Ausgangspunkt zur Berechnung des nächsten Routenabschnitts zum nächsten Durchgangsziel, nämlich Landau, gesetzt. Eine Variante des zweiten Kriteriums kann darin bestehen, dass der den Umkreis definierende Entfernungswert einen vorgegebenen Anteil von beispielsweise wiederum 5% der Gesamtlänge der Fahrtroute beträgt. Da die Gesamtlänge der Fahrtroute zum Zeitpunkt der Routenberechnung noch nicht bekannt ist, kann hierfür in grober Näherung ersatzweise die Luftlinienentfernung zwischen Start- und Zielort oder die Streckenlänge der ohne Benutzervorgaben von Durchgangszielorte berechneten Fahrtroute herangezogen werden.

Ein drittes Kriterium zur Festlegung des Umkreises des Durchgangsziels ist ein zum Erreichen des Durchgangsziels erforderlicher Wechsel der Klasse oder im Falle einer Straße Straßenklasse eines dazu zu benutzenden Verkehrswegs, insbesondere ein Wechsel auf einen Verkehrsweg einer niedrigeren Klasse. Ein solcher Straßenklassenwechsel wäre beispielsweise das Verlassen einer Autobahn auf eine Bundes-, Land-, Kreis- oder sonstige Straße oder das Befahren einer Ortsdurchgangsstraße nach einer Bundesstraße. Im oben beschriebenen Beispielsfall der geplanten Fahrt von Stuttgart-Feuerbach nach Saarlouis über das Durchgangsziel Karlsruhe ist bei Erreichen des Autobahndreiecks ein Wechsel auf die Autobahn A5, Fahrtrichtung Frankfurt und nach kurzer Strecke auf der A5 ein Verlassen derselben auf eine Straße einer gegenüber der zuletzt zu befahrenden Autobahn A5 untergeordneten Straßenklasse erforderlich. Der Umkreis um das Durchgangsziel würde im vorliegenden Fall also durch die genannte Abfahrt von der A5 definiert, die den Endpunkt der Routenberechnung für den aktuell berechneten Routenabschnitt darstellte. Ein nachfolgender Routenabschnitt würde also von der genannten Abfahrt der A5 zum nächsten Durchgangsziel Landau bestimmt.

Die Wegbeschreibung des bis zum nach dem Kritierum zur Bestimmung des Umkreises um das Durchgangsziel gemäß dem dritten Ausführungsbeispiel berechneten ersten Routenabschnitts sähe wie folgt aus, wobei der letzte Eintrag nicht mehr zum Routenabschnitt gehören würde und nur zur Verdeutlichung eingetragen ist.

| Zeit | km ges. | km Δ | Beschreibung | abbiegen | Strecke | Richtung | |
|---|---|---|---|---|---|---|---|
| 00:00 | 0 | 0,1 | Start | auf | Bregenzer Strasse | NW | A81 |
| 00:00 | 0,1 | 1,1 | - | auf | - | SW | A81 |
| 00:03 | 1,2 | 1,5 | - | auf | B295/Föhrich strasse | W | A81 |
| 00:06 | 2,7 | 1,5 | - | weiter auf | B295 | W | A81 |
| 00:08 | 4,2 | 3,1 | - | auf | B295/Ditzinger Strasse | W | A81 |
| 00:14 | 7,3 | 0,5 | - | weiter auf | B295/Weilimdorfer Strasse | W | A81 |
| 00:15 | 7,8 | 6,7 | AS Stuttgart- Feuerbach (18) | linkseinordnen auf | A81/E41 | S | AD Leonb erg |
| 00:19 | 14,5 | 52 | AD Leonberg (49) (19) | rechts halten auf | A8/E52 | SW | A8 |
| 00:48 | 66,8 | 2 | AD Karlsruhe (46)(41) | rechts halten auf | A5/E35 | W | A5 |
| 00:50 | 68,8 | 0,2 | AS Karlsruhe-Mitte (45) | rechtshalten auf | - | N | A65 |

Die Liste der möglichen Ausführungsformen des Kriteriums zur Definition des Umkreises des Durchgangsziels ist nicht abschließend. Andere Ausführungsformen des Kriteriums sind mithin vorstellbar und liegen im Bereich der vorliegenden Erfindung. Insbesondere sind auch Kombinationen der Kriterien beispielsweise dergestalt vorstellbar, dass das den weitesten Umkreis definierende Kritium den Umkreis definiert.

Eine besonders vorteilhafte Ausführungsform eines solchen kombinatorischen Kriteriums ist ein zum Erreichen des Durchgangsziels erforderlicher Straßenklassenwechsel innerhalb eines durch einen vorgegebenen Entfernungswert vorgegebenen Umkreises um das Durchgangsziel. Konkret kann ein solches Kriterium ein zum Erreichen des Durchgangsziels erforderlicher Straßenklassenwechsel innerhalb einer Entfernung von 15km zum Durchgangsziel sein. Hierzu würde demnach die wie beschrieben provisorisch berechnete Teilroute auf einen Straßenklassenwechsel, insbesondere auf eine Straßenklasse niedrigerer Ordnung, also beispielsweise von Autobahn auf Bundes- oder Landstraße, innerhalb der vorgegebenen Luftlinienentfernung vom scharfen Durchgangsziel, geprüft. Im vorliegenden Fall würde also die innerhalb des Umkreises von 15 km vom Stadtzentrum entfernt liegende Abfahrt AS Karlsruhe (45) von der Autobahn A5 auf die Kreisstraße K9657 als erster Zwischenzielpunkt und damit Endpunkt für die erste Teilroute bestimmt.

Nach erfolgter Berechnung des ersten Routenabschnitts wird der Ausgangspunkt für die Berechnung eines weiteren Routenabschnitts dem Endpunkt des zuvor berechneten Routenabschnitts gleichgesetzt (Schritt 165). Nach Berechnung des ersten Routenabschnitts gemäß obigem Beispiel von Stuttgart-Feuerbach bis in eine Umgebung von Karlsruhe wäre der neue Ausgangspunkt mithin besagter Endpunkt in der Umgebung von Karlsruhe, nach Berechnung des zweiten Routenabschnitts ein Endpunkt im Bereich des zweiten Durchgangsziels Landau und nach Berechnung des dritten Routenabschnitts der Endpunkt des dritten Routenabschnitts in der Umgebung von Pirmasens.

Sind im Zielspeicher 18 keine weiteren als der für die vorangegangene Routenabschnittsberechnung berücksichtigte Durchgangszielpunkte vorhanden, was durch die Steuerung in Schritt 170 überprüft wird, so wird nachfolgend der letzte Routenabschnitt, nämlich vom nun aktuellen Ausgangspunkt, also dem Endpunkt des zuletzt berechneten Routenabschnitts, zum Zielort berechnet (Schritt 175).

Die berechnete Route wird nach Abschluß der Routenberechnung des letzten Routenabschnitts durch Hintereinanderreihung der berechneten Routenabschnitte gebildet (Schritt 180). Die Steuerung 10 veranlaßt dann die Ausgabe der vollständigen Fahrtroute auf der Anzeigevorrichtung der Benutzerschnittstelle 16 (Schritt 125).

Wird hingegen in Schritt 170 festgestellt, daß im Zielspeicher 18 weitere, als der für die Routenberechnung bereits berücksichtigte Durchgangszielort abgelegt sind, wird das Durchgangsziel dem nächsten der weiteren Durchgangszielorte gleichgesetzt (Schritt 185) und darauffolgend der Routenabschnitt vom neuen Ausgangspunkt, nämlich dem Endpunkt des zuletzt berechneten Routenabschnitts zum Durchgangsziel berechnet (Schritt 160).

Der Ablauf geht darauf, wie bereits beschrieben, zu Schritt 165 und folgende über.

Im beschriebenen Beispielsfall einer geplanten Fahrt von Stuttgart-Feuerbach nach Saarlouis über die durch den Benutzer in Schritt 145 über die Benutzerschnittstelle 16 vorgegebenen Durchgangsziele Karlsruhe, Landau und Pirmasens ergibt sich aufgrund des beschriebenen Verfahrens zur Routenberechnung eine Fahrtroute wie aus nachstehender Wegbeschreibung ersichtlich.

Wegbeschreibung der Fahrtroute nach Benutzervorgabe der Durchgangsziele Karlsruhe, Landau, Pirmasens:

| Zeit | km ges. | km Δ | Beschreibung | abbiegen | Strecke | Richtung | |
|---|---|---|---|---|---|---|---|
| 00:00 | 0 | 0,1 | Start | auf | Bregenzer Strasse | NW | A81 |
| 00:00 | 0,1 | 1,1 | - | auf | - | SW | A81 |
| 00:03 | 1,2 | 1,5 | - | auf | B29S/Föhrich strasse | W | A81 |
| 00:06 | 2,7 | 1,5 | - | weiter auf | B295 | W | A81 |
| 00:08 | 4,2 | 3,1 | - | auf | B295/Ditziner Strasse | W | A81 |
| 00:14 | 7,3 | 0,5 | - | weiter auf | B295/Weilimd Worfer Strasse | W | A81 |
| 00:15 | 7,8 | 6,7 | AS Stuttgart-Feuerbach (18 ) | links einordnen auf | A81/E41 | S | AD Leonb erg |
| 00:19 | 14,5 | 52 | AD Leonberg (49)(19) | rechts halten auf | A8/E52 | SW | A8 |
| 00:48 | 66,8 | 2 | AD Karlsruhe (46)(41) | rechts halten auf | A5/E35 | W | A5 |
| 00:50 | 68,8 | 0,2 | AB Karlsruhe- Mitte (45) | rechts halten auf | - | N | A65 |
| 00:50 | 69 | 1,1 | - | gerade aus auf | - | NO | A65 |
| 00:51 | 70,1 | 2,5 | - | weiter auf | K9657 | NW | A65 |
| 00:52 | 72,6 | 0,8 | - | auf | Edeltrud- Tunnel | W | A65 |
| 00:54 | 73,4 | 11 | - | auf | K9657 | W | A65 |
| 01:00 | 83,9 | 24 | AK Wörther Kreuz (3) | weiter auf | A65 | W | A65 |
| 01:14 | 108,2 | 0,5 | AS Landau- Nord (15) | rechts halten auf | - | N | A8 |
| 01:15 | 108, 7 | 13 | - | auf | - | W | A8 |
| 01:28 | 121,4 | 6,4 | - | rechts einordnen auf | B10 | SW | A8 |
| 01:40 | 127,8 | 0,1 | im Kreisverkehr 16. Ausfahrt | rechts halten auf | B48 | NW | A8 |
| 01:40 | 127,9 | 0 | - | links einordnen auf | B48 | SW | A8 |
| 01:40 | 127,9 | 15 | - | rechts einordnen auf | B10 | NW | A8 |
| 01:56 | 142,5 | 4,7 | - | halb rechts auf | B10 | W | A8 |
| 02:01 | 147,2 | 12 | - | gerade aus auf | B10 | W | A8 |
| 02:18 | 159,2 | 0,1 | AS Pirmasens (15) | rechts halten auf | A8 | NW | AK Neunk irche n |
| 02:18 | 159,3 | 30 | - | rechts einordnen auf | A8 | N | AK Neunk irche n |
| 02:35 | 189,4 | 7,9 | AK Neunkirchen (8) (27) | weiter auf | A8 | NW | A8 |
| 02:40 | 197,3 | 6,3 | AD Neunkirchen/S piesen (23) | weiter auf | A8 | W | A8 |
| 02:44 | 203,6 | 5,9 | AD Friedrichstha 1 (20) (1) | weiter auf | A8 | NW | A8 |
| 02:47 | 209,5 | 19 | AK Saarbrücken (143) (17) | weiter auf | A8 | NW | A8 |
| 02:57 | 228,5 | 0,1 | AS Saarwellingen (13) | rechts halten auf | - | N | - |
| 02:57 | 228,6 | 0,1 | - | weiter auf | - | N | - |
| 02:58 | 228,7 | 1,2 | AS Saarwellingen (13) Am Ende der Straße | links einordnen auf | B405 | SW | - |
| 02:59 | 229,9 | 1,9 | - | auf | B405/Lebacher Strasse | SW | - |
| 03:04 | 231,8 | 0,8 | Am Ende der Straße | rechts einordnen auf | B405/B51/Bahnhofstrasse | W | - |
| 03:06 | 232,6 | 0,4 | - | weiter auf | B51/Schanzen strasse | W | - |
| 03:06 | 233 | 0,4 | - | links einordnen auf | B51/Holtzendorfer Strasse | SW | - |
| 03:08 | 233,4 | 0,6 | - | auf | Holtzendorfer Strasse | SW | - |
| 03:09 | 234 | 0,3 | - | auf | Deutsche Strasse | SO | - |
| 03:10 | 234,3 | 0,1 | - | auf | Französische Strasse | SO | - |
| 03:11 | 234,4 | - | Ziel | - | - | - | - |

Wie aus der Wegbeschreibung für die aufgrund der durch den Benutzer vorgegebenen Durchgangsziele berechneten Fahrtroute ersichtlich, führt diese über andere Verkehrswege, als die ohne entsprechende Benutzervorgaben berechnete Fahrtroute. Die berechnete alternative Fahrtroute führt nach Leitung auf die Autobahn A81, Richtung Karlsruhe, über die A8, Richtung Karlsruhe, durch Karsruhe hindurch auf die A65 Richtung Landau, von dort über die B10 Richtung Pirmasens und von dort über die A6 und in deren Verlängerung A620 bis Saarlouis.

Es wird also durch Vorgabe der Durchgangsziele ein abweichender Routenverlauf dergestalt erzwungen, daß die Route über eine nach oben angegebenem Kritium vorgegebene Umgebung der Zwischenziele führt. Im vorliegenden Fall ergibt sich durch Einbeziehung der Bundesstraße B10 eine gegenüber der ohne Benutzervorgaben berechneten Fahrtroute deutlich geringere Streckenlänge, allerdings auf Kosten einer möglicherweise erhöhten Fahrtdauer, wie aus einem Vergleich der Wegbeschreibungen ersichtlich.

Das beschriebene Verfahren stellt eine Fahrtroute für die nachfolgende Zielführung zur Verfügung, entlang derer der Fahrzeugführer durch akustische und/oder optische Fahranweisungen geleitet wird. Verläßt der Fahrzeugführer die berechnete Fahrtroute durch Nichtbefolgen einer Fahrtanweisung oder ein nicht vorgesehenes Fahrmanöver, und ist weiterhin eine Rückführung auf die ursprünglich berechnete Fahrtroute nicht möglich oder zu aufwendig, beispielsweise bei Auffahrt auf eine Autobahn in falscher Fahrtrichtung o. ä., kann eine Routenneuberechnung erforderlich werden. Für eine solche Routenneuberechnung wird der dann aktuelle Fahrzeugstandort als Startpunkt angesehen, die Routenneuberechnung erfolgt im übrigen in der beschriebenen Weise. Alternativ kann in dieser Situation auch vorgesehen sein, daß für die erforderliche Neuberechnung die durch den Benutzer vorgegebenen Durchgangsziele weiter berücksichtigt werden, wobei der Benutzer durch Anzeige oder Ausgabe der neu berechneten Route (in Schritt 125) die Möglichkeit erhält, eventuell für die neu berechnete Route als unzweckmäßig erachtete, weil zum Beispiel mit Umwegen verbundene, ursprünglich vorgegebene Durchgangsziele durch Eingabe neuer Durchgangsziele (in Schritt 145) zu löschen.

Das erfindungsgemäße Verfahren kann sowohl im Rahmen einer Vorausberechnung der Fahrtroute am Startort, als auch in Form einer Online-Routenberechnung während der Fahrtzielführung angewendet werden. Die Online-Routenberechnung kann dergestalt ausgeführt sein, daß die Route zunächst vom Start- zum ersten Durchgangszielort berechnet wird. Der Fahrzeugführer wird dann nach Maßgabe des berechneten Routenabschnitts bis in den Umkreis des Durchgangsziels geführt. Bei Erreichen des nach oben angegebenem Kritium definierten Umkreises des Durchgangsziels wird die Berechnung des nächsten Routenabschnitts vom nun aktuellen Fahrzeugstandort, der im Umkreis des Durchgangsziels liegt, zum nächsten Durchgangsziel oder dem Zielort in der beschriebenen Art und Weise angestoßen.

Weiter kann das erfindungsgemäße Verfahren auch auf eine Offboard-Routenberechnung dergestalt angewandt werden, daß die Routenabschnitte nach Übertragung des ermittelten Start- oder aktuellen Standorts, des vom Benutzer vorgegebenen Zielorts und der benutzerdefinierten Durchgangsziele über die Luftschnittstelle 15 an einen Service-Provider bei diesem aufgrund ihm vorliegender Verkehrswege- und gegebenenfalls zusätzlicher Verkehrswegezustandsinformationen berechnet werden. Die Routenabschnitte oder diese beschreibende Informationen, wie beispielsweise anzufahrende Stützstellen, aufgrund derer das fahrzeugfeste Navigationsgerät eine Fahrtroute interpoliert, werden anschließend zum Zwecke der Zielführung vom Service-Provider über die Luftschnittstelle 15 an das fahrzeugfeste Navigationsgerät 1 übertragen und in diesem gespeichert.

## Patentansprüche

1. Verfahren zur Routenberechnung von einem Startort zu einem Zielort,
**dadurch gekennzeichnet,**
**dass** nach Vorgabe mindestens eines Durchgangszielorts automatisch zu jedem des mindestens einen Durchgangszielorts ein Durchgangszielpunkt bestimmt wird, der in einem durch ein vorgegebenes Kriterium bestimmten Umkreis des mindestens einen Durchgangszielorts liegt, und dass die Route über den mindestens einen Durchgangszielpunkt berechnet wird.

2. Verfahren nach Anspruch 1,
**dadurch gekennzeichnet,**
**dass**
- in einem ersten Schritt der Startort als Ausgangspunkt für die Routenberechnung und ein erster des mindestens einen Durchgangszielorts als Durchgangsziel gesetzt wird,
- in einem zweiten Schritt ein Routenabschnitt vom Ausgangspunkt bis zu dem automatisch bestimmten, in einem nach dem vorgegebenen Kriterium bestimmten Fangbereich um das Durchgangsziel liegenden Durchgangszielpunkt berechnet wird,
- in einem dritten Schritt der Endpunkt (= Durchgangszielpunkt) des zuvor berechneten Routenabschnitts als Ausgangspunkt für die Berechnung eines weiteren Routenabschnitts gesetzt wird,
**daß** im Falle weiterer Durchgangszielorte der nächste des mindestens einen Durchgangszielorts als Durchgangsziel gesetzt und der Ablauf mit dem zweiten Schritt fortgesetzt wird,
**daß** im Falle keiner weiteren Durchgangszielorte
- in einem vierten Schritt der Routenabschnitt vom im dritten Schritt gesetzten Ausgangspunkt zum Zielort berechnet wird, und
**daß** sich die Route aus einer Hintereinanderreihung der berechneten Routenabschnitten ergibt.

3. Verfahren nach Anspruch 1 oder 2, **dadurch gekennzeichnet, dass** das vorgegebene Kriterium eine vorgegebene Entfernung zum Durchgangsziel ist.

4. Verfahren nach Anspruch 3, **dadurch gekennzeichnet, dass** die vorgegebene Entfernung ein fest vorgegebener oder vorgebbarer Entfernungswert ist.

5. Verfahren nach Anspruch 3, **dadurch gekennzeichnet, dass** die vorgegebene Entfernung aus berechneten Routeninformationen, insbesondere der berechneten Routenlänge, abgeleitet wird.

6. Verfahren nach Anspruch 3, **dadurch gekennzeichnet, dass** die vorgegebene Entfernung ein fest vorgegebener oder vorgebbarer Entfernungswert ist oder aus berechneten Routeninformationen, insbesondere der berechneten Routenlänge, abgeleitet wird, je nachdem, welches Kriterium einen weiteren Umkreis definiert.

7. Verfahren nach Anspruch 1 oder 2, **dadurch gekennzeichnet, dass** das vorgegebene Kriterium ein zum Erreichen des Durchgangsziels erforderlicher Straßenklassenwechsel ist.

8. Verfahren nach Anspruch 7, **dadurch gekennzeichnet, dass** das vorgegebene Kriterium ein zum Erreichen des Durchgangsziels erforderlicher Wechsel einer Straßenklasse auf eine Straße einer niedrigeren Straßenklasse ist.

9. Verfahren nach Anspruch 1 oder 2, **dadurch gekennzeichnet, dass** das vorgegebene Kritium ein zum Erreichen des Durchgangsziels erforderlicher Straßenklassenwechsel nach Anspruch 6 oder 7 innerhalb einer vorgegebenen Entfernung vom Durchgangsziel nach einem der Ansprüche 3 bis 6 ist.

## Claims

1. Method for calculating the route from a start to a destination,
**characterized**
**in that** selection of at least one via destination is automatically followed by determination, for each of the at least one via destinations, of a via arrival point which is situated within a radius, determined by a prescribed criterion, of the at least one via destination, and in that the route is calculated using the at least one via arrival point.

2. Method according to Claim 1,
**characterized**
**in that**
- in a first step the start is set as the starting point for the route calculation and a first of the at least one via destinations is set as the via objective,
- in a second step a route section is calculated from the starting point to the automatically determined via arrival point situated within a catchment area around the via objective, which catchment area is determined on the basis of the prescribed criterion,
- in a third step the terminal point (= via arrival point) of the previously calculated route section is set as the starting point for calculating a further route section,
**in that** if there are further via destinations then the next one from the at least one via destinations is set as the via objective and the process continues with the second step,
**in that** if there are no further via destinations then
- in a fourth step the route section from the starting point set in the third step to the destination is calculated, and
**in that** the route is obtained from concatenation of the calculated route sections.

3. Method according to Claim 1 or 2, **characterized in that** the prescribed criterion is a prescribed distance to the via objective.

4. Method according to Claim 3, **characterized in that** the prescribed distance is a firmly prescribed or prescribable distance value.

5. Method according to Claim 3, **characterized in that** the prescribed distance is derived from calculated route information, particularly the calculated route length.

6. Method according to Claim 3, **characterized in that** the prescribed distance is a firmly prescribed or prescribable distance value or is derived from calculated route information, particularly the calculated route length, depending on which criterion defines a further radius.

7. Method according to Claim 1 or 2, **characterized in that** the prescribed criterion is a change of road class which is required in order to reach the via objective.

8. Method according to Claim 7, **characterized in that** the prescribed criterion is a change of road class, required in order to reach the via objective, onto a road in a lower road class.

9. Method according to Claim 1 or 2, **characterized in that** the prescribed criterion is a change of road class which is required in order to reach the via objective according to Claim 6 or 7 within a prescribed distance from the via objective according to one of Claims 3 to 6.

## Revendications

1. Procédé de calcul d'un trajet entre un endroit de départ et un endroit de destination,
**caractérisé en ce qu'**
après prédéfinition d'au moins un endroit de destination de passage, on détermine automatiquement un point de destination de passage pour chaque endroit de destination de passage qui se situe dans un environnement défini par un critère prédéterminé d'au moins un endroit de destination de passage, et on calcule le trajet passant par au moins un point de destination de passage.

2. Procédé selon la revendication 1,
**caractérisé en ce que**
- dans une première étape, on fixe l'endroit de départ comme point de départ pour le calcul du trajet et on fixe, comme destination de passage, au moins un premier endroit de destination de passage,
- dans une seconde étape, on détermine un segment de trajet entre le point de départ jusqu'au point cible de passage déterminé automatiquement, dans une zone de saisie déterminée selon un critère prédéfini autour de la destination de passage,
- dans une troisième étape, on fixe le point final (c'est-à-dire le point de destination de passage) du segment de trajet calculé préalablement comme point de départ pour le calcul d'un autre segment de trajet, et
dans le cas d'autres endroits cibles de passage, on fixe comme cible de passage au moins un endroit de destination de passage et on poursuit l'opération avec la seconde étape,
dans le cas d'aucun autre endroit de destination de passage,
- dans une quatrième étape, on calcule le segment de trajet à partir du point de départ fixé dans la troisième étape jusqu'au point de destination, et
le trajet s'obtient par l'assemblage les uns derrière les autres, des segments de trajet calculés.

3. Procédé selon la revendication 1 ou 2,
**caractérisé en ce que**
le critère prédéfini est d'une distance prédéterminée par rapport à la destination de passage.

4. Procédé selon la revendication 3,
**caractérisé en ce que**
la distance prédéfinie est une mesure de distance prédéfinie de manière fixe ou qui peut être prédéfinie.

5. Procédé selon la revendication 3,
**caractérisé en ce que**
la distance prédéfinie est déduite par calcul d'information de trajet notamment de la longueur calculée du trajet.

6. Procédé selon la revendication 3,
**caractérisé en ce que**
la distance prédéfinie est une valeur prédéfinie de manière fixe ou susceptible d'être prédéfinie ou encore elle est déduite à partir d'informations de trajet calculées notamment de la longueur calculée du trajet, et selon cette valeur, on définit un autre cercle par ce critère.

7. Procédé selon la revendication 1 ou 2,
**caractérisé en ce que**
le critère prédéfini est un changement de classe de route nécessaire pour atteindre la destination de passage.

8. Procédé selon la revendication 7,
**caractérisé en ce que**
le critère prédéfini est un changement nécessaire pour atteindre la destination de passage pour une classe de route sur une route de classe de route inférieure.

9. Procédé selon la revendication 1 ou 2,
**caractérisé en ce que**
le critère prédéfini est un changement de classe de route nécessaire pour atteindre la destination de passage selon les revendications 6 ou 7 dans une distance prédéfinie de la destination de passage selon l'une des revendications 3 à 6.
